# EUROPEAN PATENT APPLICATION

(11) **EP 4 498 610 A1**
(43) Date of publication of application: **29.01.2025**
(21) Application number: 23881153.3
(22) Date of filing: 26.04.2023
(51) Int. Cl.: H04B 1/401, H01Q 1/50

(54) **CIRCUIT FOR IMPLEMENTING ANTENNA MULTIPLEXING**

(30) Priority: 27.10.2022 CN 202211323987
(71) Applicant: Honor Device Co., Ltd., Shenzhen, Guangdong 518040 (CN)
(72) Inventor: LIU, Liang, Shenzhen, Guangdong 518040 (CN); LIU, Shumin, Shenzhen, Guangdong 518040 (CN); OUYANG, Yuehui, Shenzhen, Guangdong 518040 (CN); GONG, Weilin, Shenzhen, Guangdong 518040 (CN); XIAO, Chiyang, Shenzhen, Guangdong 518040 (CN)
(74) Representative: Isarpatent
(86) International application number: PCT/CN2023/090990
(87) International publication number: WO 2024/087558

(57) **Abstract**

Embodiments of this application relate to the field of radio frequency circuit technologies, and disclose a circuit for implementing antenna multiplexing, to connect a BT communication signal to a cellular communication link, so as to multiplex a cellular antenna to implement synchronous execution of BT communication and WIFI communication. A specific solution is as follows: The circuit includes: a first transceiver, where the first transceiver includes a BT communication port; and a first switching module, where the first switching module includes a first switching module first end and a first switching module second end that are used for input and a first switching module third end that is used for output. The BT communication port of the first transceiver is coupled to the first end of the first switching module, the first switching module third end of the first switching module is coupled to a first antenna, and the first antenna is one of at least one cellular antenna. The first switching module includes a first working state, and in the first working state, the first switching module first end is connected to the first switching module third end, so that the first antenna is configured to perform BT communication.

## Description

This application claims priority to Chinese Patent Application No. 202211323987.1, filed with the China National Intellectual Property Administration on October 27, 2022 and entitled "CIRCUIT FOR IMPLEMENTING ANTENNA MULTIPLEXING", which is incorporated herein by reference in its entirety.

### TECHNICAL FIELD

This application relates to the field of radio frequency circuit technologies, and in particular, to a circuit for implementing antenna multiplexing.

### BACKGROUND

A terminal electronic device is integrated with a plurality of wireless communication functions, and correspondingly, a quantity of antennas is increasing. Therefore, a space layout for disposing the antennas in the electronic device is increasingly tight. The wireless communication functions may include wireless communication based on Bluetooth (Bluetooth) and WIFI. Therefore, in an existing electronic device (for example, a mobile phone), it becomes increasingly difficult to simultaneously dispose antennas respectively corresponding to Bluetooth communication and WIFI communication.

To enable the electronic device to provide a WIFI communication function and a Bluetooth communication function at the same time, corresponding antennas need to be properly configured for Bluetooth communication and WIFI communication, to support respective wireless communication functions.

### SUMMARY

Embodiments of this application provide a circuit for implementing antenna multiplexing, to connect a BT communication signal to a cellular communication link, so as to multiplex a cellular antenna to implement synchronous execution of BT communication and WIFI communication.

To achieve the foregoing objective, the following technical solutions are used in embodiments of this application.

According to a first aspect, a circuit for implementing antenna multiplexing is provided. The circuit is used in an electronic device, at least one cellular antenna is further disposed in the electronic device, and the at least one cellular antenna is configured to support cellular communication of the electronic device. The circuit includes: a first transceiver, where the first transceiver includes a Bluetooth BT communication port; and a first switching module, where the first switching module includes a first switching module first end and a first switching module second end that are used for input and a first switching module third end that is used for output. The BT communication port of the first transceiver is coupled to the first end of the first switching module, the first switching module third end of the first switching module is coupled to a first antenna, and the first antenna is one of the at least one cellular antenna. The first switching module includes a first working state, and in the first working state, the first switching module first end is connected to the first switching module third end, so that the first antenna is configured to perform BT communication.

In this way, a BT signal is connected to a cellular antenna by using the first switching module, to multiplex the cellular antenna to perform BT communication.

Optionally, the electronic device further includes a second transceiver and at least one cellular radio frequency front end. The second transceiver is connected to the at least one cellular radio frequency front end, and the at least one cellular radio frequency front end is coupled to the at least one cellular antenna. Frequencies of signals that can be processed by different cellular radio frequency front ends are not identical. The second transceiver and the at least one cellular radio frequency front end are configured to perform radio frequency domain processing on a cellular communication signal when the electronic device performs cellular communication.

Optionally, a second switching module is disposed between the at least one cellular radio frequency front end and the at least one cellular antenna, and the second switching module includes one or more switching switches. The second switching module has at least two different working states, and in different working states of the second switching module, connection relationships between the at least one cellular radio frequency front end and the at least one cellular antenna are not identical.

Optionally, that the first switching module third end is coupled to the first antenna includes: The first switching module third end is coupled to at least one end of the second switching module, so that the electronic device controls the second switching module, to couple the BT communication port of the first transceiver to the first antenna through the first switching module and the second switching module.

Optionally, the second switching module includes at least one of the following: a 3P3T switch and a DPDT switch.

Therefore, when there is originally switching logic on a cellular link, a BT signal may be input to the switching logic of the cellular link by using the first switching module, so that when BT communication needs to be performed by using a cellular antenna, the BT signal can be sent and received by using the cellular antenna through state control on each switching module.

Optionally, a BT front end is further disposed in the electronic device, and a BT front end first end and a BT front end second end are disposed on the BT front end. The BT front end first end is coupled to the first switching module first end, and the BT front end second end is coupled to the BT communication port of the first transceiver. The BT front end is configured to perform, in cooperation with the first transceiver, radio frequency domain processing on a signal in BT communication. In this way, the BT front end is separately disposed, to implement complete radio frequency domain processing on the BT signal, thereby improving BT communication quality.

Optionally, the electronic device further includes a second antenna and a first radio frequency front end. An operating band of the second antenna includes a 2.4G band. The first radio frequency front end is disposed between a local area network WIFI communication port of the first transceiver and the second antenna. The first radio frequency front end and the first transceiver are configured to perform radio frequency domain processing on a signal in WIFI communication and/or a signal in BT communication. In this way, WIFI communication based on the second antenna and the first radio frequency front end is implemented. With reference to the foregoing example, the electronic device may further perform BT communication based on a cellular antenna, so that WIFI communication and BT communication can be simultaneously performed.

Optionally, the second transceiver is a cellular transceiver, and the at least one cellular radio frequency front end includes a diversity front end, a primary front end, a PMIMO front end, and a DMIMO front end. The first transceiver is a WIFI/BT transceiver, and the Bluetooth BT communication port includes a WIFI transmit TX port, a WIFI receive RX port, a BT transmit TX port, and a BT receive RX port. The first switching module is an SPDT switch, and the second switching module includes a first 3P3T switch, a second 3P3T switch, and a first DPDT switch. A first output end of the cellular transceiver is connected to the diversity front end, an output end of the diversity front end is connected to a first input end of the first 3P3T switch, a second output end of the cellular transceiver is connected to the primary front end, an output end of the primary front end is connected to a second input end of the first 3P3T switch, a third output end of the cellular transceiver is connected to the PMIMO front end, an output end of the PMIMO front end is connected to a second input end of the second 3P3T switch, a fourth output end of the cellular transceiver is connected to the DMIMO front end, an output end of the DMIMO front end is connected to a second input end of the first DPDT switch, a first output end of the first 3P3T switch is connected to the diversity antenna, a second output end of the first 3P3T switch is connected to the primary antenna, a third output end of the first 3P3T switch is connected to a first input end of the second 3P3T switch, a first output end of the second 3P3T switch is connected to a third input end of the first 3P3T switch, a second output end of the second 3P3T switch is connected to the PMIMO antenna, and a third output end of the second 3P3T switch is connected to a first input end of the first DPDT switch. A first output end of the first DPDT switch is connected to a second input end of the SPDT, and a second output end of the first DPDT switch is connected to the DMIMO antenna. A first input end of the SPDT is directly or indirectly connected to the WIFI/BT transceiver. An output end of the SPDT is connected to a third input end of the second 3P3T switch.

Optionally, a third switching module is further disposed between the BT communication port of the first transceiver and the first switching module, the third switching module includes a third switching module first end and a third switching module second end that are used for input and a third switching module third end and a third switching module fourth end that are used for output. The third switching module first end and the third switching module second end are connected to the BT communication port of the first transceiver. When the third switching module works in different states, the third switching module first end and the third switching module second end are connected to the third switching module third end, or the third switching module first end and the third switching module second end are connected to the third switching module fourth end. That the BT communication port of the first transceiver is coupled to the first switching module first end includes: The BT communication port of the first transceiver is coupled to the third switching module first end, and the third switching module third end is coupled to the first switching module first end, so that the electronic device controls the third switching module first end to be connected to the third switching module third end, to couple the BT communication port of the first transceiver to the first antenna through the third switching module and the first switching module.

Optionally, the BT communication port of the first transceiver includes the BT transmit TX port and the BT receive RX port. That the third switching module first end and the third switching module second end are connected to the BT communication port of the first transceiver includes: The BT transmit TX port is connected to the third switching module first end, and the BT receive RX port is connected to the third switching module second end; or the BT transmit TX port is connected to the third switching module second end, and the BT receive RX port is connected to the third switching module first end.

Optionally, the third switching module is a second DPDT switch. The first input end of the SPDT is connected to the WIFI/BT transceiver through the second DPDT switch. Both the WIFI transmit TX port and the WIFI receive RX port of the WIFI/BT transceiver are connected to a first input end of the first radio frequency front end. The BT transmit TX port of the WIFI/BT transceiver is connected to a second input end of the DPDT-2, the BT receive RX port of the WIFI/BT transceiver is connected to a first input end of the DPDT-2, a first output end of the DPDT-2 is connected to the first input end of the SPDT. A second output end of the DPDT-2 is connected to a second input end of the first radio frequency front end. An output end of the first radio frequency front end is connected to a second antenna.

Optionally, the third switching module fourth end is coupled to the second antenna through the first radio frequency front end. When the third switching module first end and the third switching module second end are connected to the third switching module fourth end, the BT communication is performed by using the second antenna. In this way, a BT signal may also be input to the second antenna, to implement time-division execution of WIFI communication and BT communication on the second antenna.

Optionally, an operating band of the first antenna covers 2.4 GHz-2.5 GHz.

Optionally, an operating band of the first antenna includes at least a part of a cellular communication band between 700 MHz-3 GHz.

Optionally, the at least one cellular antenna includes a primary antenna. The second switching module includes a first 3P3T and a second 3P3T. The first switching module includes a first SPDT. That the BT communication port of the first transceiver is coupled to the first antenna through the first switching module includes: The BT communication port is coupled to the first antenna through the first SPDT, the second 3P3T, and the first 3P3T, and the first antenna is the primary antenna.

According to a second aspect, an electronic device is provided. The circuit according to any one of the first aspect and the possible designs of the first aspect is disposed in the electronic device. The electronic device controls a switching module in the circuit to operate in different states, to multiplex a first antenna (for example, a primary antenna) to perform BT communication.

It should be understood that technical features of the technical solutions provided in the second aspect can all correspond to the technical solutions provided in the first aspect and the possible designs of the first aspect, and therefore similar beneficial effects can be achieved. Details are not described herein again.

### BRIEF DESCRIPTION OF DRAWINGS

FIG. 1 is a diagram of WI-FI and Bluetooth communication on a mobile phone;
FIG. 2 is a diagram of an antenna disposed in a mobile phone;
FIG. 3 is a diagram of a second antenna radio frequency circuit and an antenna;
FIG. 4 is a switching diagram in which WIFI communication and BT communication share a same antenna;
FIG. 5 is a diagram of time division communication;
FIG. 6 is a diagram of composition of an electronic device according to an embodiment of this application;
FIG. 7 is a diagram of composition of an electronic device according to an embodiment of this application;
FIG. 8 is a diagram of an antenna disposed in a mobile phone according to an embodiment of this application;
FIG. 9 is a diagram of radio frequency front end and antenna selection in communication of a terminal product according to an embodiment of this application;
FIG. 10 is a diagram of radio frequency front end and antenna selection in communication of a terminal product according to an embodiment of this application;
FIG. 11 is a diagram of radio frequency front end and antenna selection in communication of a terminal product according to an embodiment of this application;
FIG. 12 is a diagram of radio frequency front end and antenna selection in communication of a terminal product according to an embodiment of this application;
FIG. 13 is a logical diagram of multi-SIM card switching and allocation according to an embodiment of this application;
FIG. 14 is a diagram of radio frequency front end and antenna selection in communication of a terminal product according to an embodiment of this application;
FIG. 15 is a diagram of radio frequency front end and antenna selection in communication of a terminal product according to an embodiment of this application;
FIG. 16 is a diagram of radio frequency front end and antenna selection in communication of a terminal product according to an embodiment of this application;
FIG. 17 is a diagram of radio frequency front end and antenna selection in communication of a terminal product according to an embodiment of this application;
FIG. 18 is a diagram of radio frequency front end and antenna selection in communication of a terminal product according to an embodiment of this application;
FIG. 19 is a diagram of radio frequency front end and antenna selection in communication of a terminal product according to an embodiment of this application;
FIG. 20 is a diagram of radio frequency front end and antenna selection in communication of a terminal product according to an embodiment of this application; and
FIG. 21 is a diagram of radio frequency front end and antenna selection in communication of a terminal product according to an embodiment of this application.

### DESCRIPTION OF EMBODIMENTS

Currently, an electronic device may provide a user with wireless communication functions based on different protocol types. For example, wireless communication of the different protocol types may include wireless communication with a same frequency, for example, communication based on a wireless network communication technology (WIFI) (that is, communication in a wireless local area network) in a 2.4G band and Bluetooth (blue tooth, BT) communication with a frequency that is also 2.4 GHz. In some other implementations, wireless communication of the different protocol types may have different frequencies, for example, 2G, 3G, 4G, and 5G communication. When wireless communication in 2G, 3G, 4G, and/or 5G bands is implemented in a cellular wireless networking manner, the wireless communication corresponding to 2G, 3G, 4G, and/or 5G may also be referred to as cellular communication. In some implementations, the 2.4G band may include at least a part of a band of 2.4 GHz-2.5 GHz.

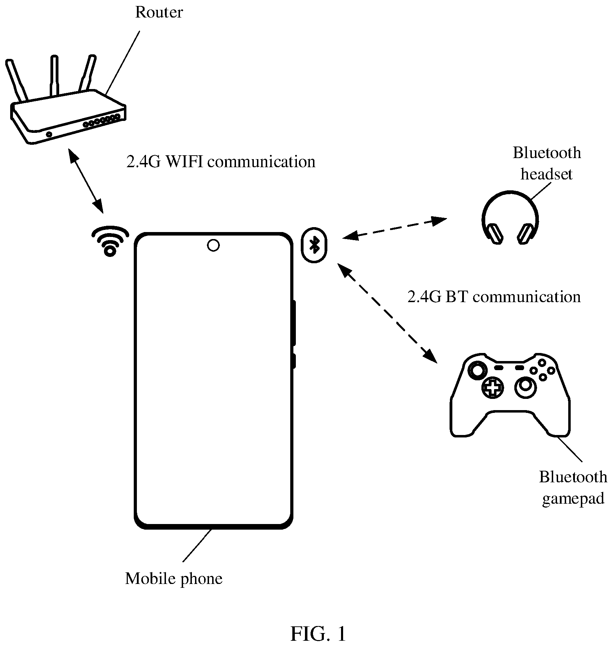

WIFI communication and BT communication are used as examples. Refer to FIG. 1. An electronic device may implement wireless communication with a device such as a router through 2.4G WIFI communication, to access a network through the router. The electronic device may further implement wireless communication with a device such as a Bluetooth headset or a Bluetooth gamepad through BT communication, to implement wireless control on the corresponding device.

To support the foregoing wireless communication functions, a plurality of antennas may be disposed in the electronic device.

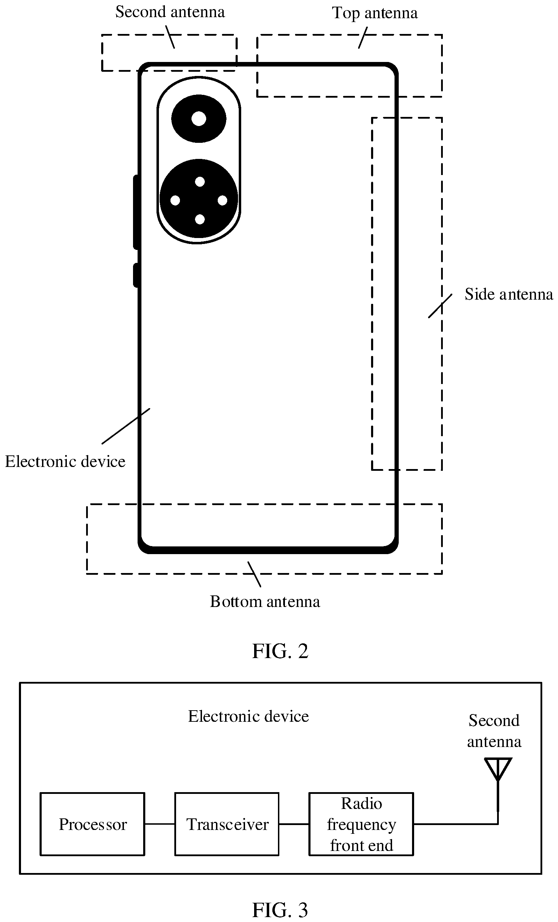

For example, refer to FIG. 2. For example, the electronic device is a mobile phone. A bottom antenna, a top antenna, a side antenna, and the like that are configured to support cellular communication may be disposed in the mobile phone. In some embodiments of this application, the bottom antenna may be used as a main antenna and used to cover 700 MHz-2700 MHz, to support two types of communication scenarios of sending and receiving. The top antenna may be used as an auxiliary antenna and used to cover at least a part of a band of 700 MHz-2700 MHz, to support a communication scenario corresponding to receiving and/or sending in a corresponding coverage band.

A second antenna for supporting 2.4G WIFI communication and/or BT communication may be further disposed in the mobile phone.

To implement a wireless communication function, a radio frequency front end and a transceiver that correspond to each of different bands may be further disposed in the electronic device. One or more processors connected to the transceiver may be further disposed in the electronic device, to implement signal sending and receiving processes.

For example, refer to FIG. 3. A processor may be connected to at least one antenna through a transceiver and a radio frequency front end. An operating frequency of the antenna corresponds to the radio frequency front end, so that the radio frequency front end and the transceiver can effectively perform radio frequency domain modulation at the corresponding frequency on a signal received by the antenna (or a signal to be sent by the antenna).

A signal sending scenario is used as an example. The processor may generate, based on a requirement of the electronic device, a digital signal that needs to be sent. Digital-to-analog conversion may be performed on the digital signal to obtain a corresponding analog signal. The analog signal may be transmitted to the transceiver and the radio frequency front end for radio frequency domain modulation. A modulated analog signal may be transmitted to an antenna with a corresponding frequency, so that the antenna may send the modulated analog signal in a form of an electromagnetic wave.

A signal receiving scenario is used as an example. The antenna may receive an electromagnetic wave in space, convert the electromagnetic wave into an analog signal, and transmit the analog signal to the radio frequency front end. The radio frequency front end and the transceiver connected to the radio frequency front end may perform radio frequency domain parsing on the analog signal, perform analog-to-digital conversion on a parsed analog signal to generate a corresponding digital signal, and transmit the corresponding digital signal to the processor for further processing. In this way, the processor can implement signal receiving processing based on the received digital signal.

It may be understood that, in the electronic device, a plurality of logical chains shown in FIG. 3 may be included, to implement signal sending and receiving at a specific frequency (band). One logical chain shown in FIG. 3 may correspond to a communication link at one frequency.

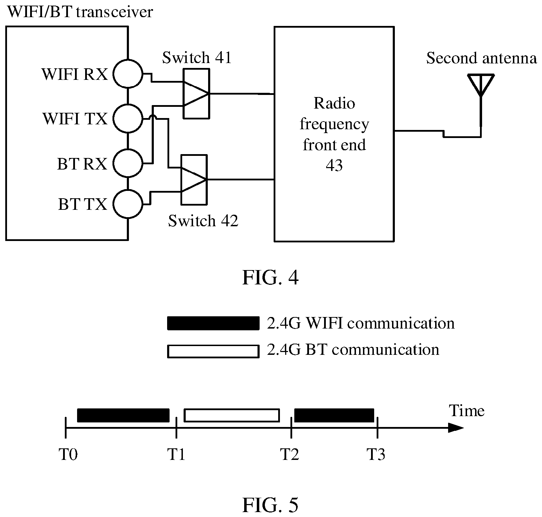

WIFI communication and BT communication are used as examples. For 2.4G WIFI communication, operating bands corresponding to WIFI communication and BT communication are the same, and both are 2.4 GHz. Therefore, in some implementations, as shown in FIG. 4, the WIFI communication link and the BT communication link may share a same second antenna and a radio frequency front end 43 that has a 2.4 GHz radio frequency domain processing capability.

In the example in FIG. 4, a connection relationship between a radio frequency domain and an antenna is shown. It may be understood that, with reference to the foregoing description in FIG. 3, in some embodiments, a front end for radio frequency domain processing may further include a component such as a processor for digital domain processing, which is not shown in the example in FIG. 4.

A radio frequency domain processing part may include a WIFI/BT transceiver and the radio frequency front end 43 that has the 2.4 GHz radio frequency domain processing capability.

The WIFI/BT transceiver may include four ports that are coupled to the radio frequency front end 43. The four ports may include ports corresponding to WIFI communication, for example, a WIFI TX port for transmitting a WIFI signal and a WIFI RX port for receiving a WIFI signal. The four ports may further include ports corresponding to BT communication, for example, a BT TX port for transmitting a BT signal and a BT RX port for receiving a BT signal.

In the example shown in FIG. 4, WIFI communication and BT communication share a same second antenna. Therefore, a switch 41 and a switch 42 may be disposed between the WIFI/BT transceiver and the radio frequency front end 43, so that when WIFI communication and BT communication are separately performed, a corresponding port of the transceiver is coupled to the radio frequency front end 43.

For example, when WIFI communication is performed, the switch 41 and the switch 42 are adjusted, so that the WIFI TX port and the WIFI RX port of the WIFI/BT transceiver are coupled to the radio frequency front end 43. In this way, a WIFI signal may flow into the WIFI RX port of the WIFI/BT transceiver through the second antenna and the radio frequency front end 43, to implement signal receiving in WIFI communication. In a signal sending scenario in WIFI communication, a signal may be transmitted from the WIFI TX port of the WIFI/BT transceiver to the second antenna through the radio frequency front end 43, and sent to the outside in a form of an electromagnetic wave.

For another example, when BT communication is performed, the switch 41 and the switch 42 are adjusted, so that the BT TX port and the BT RX port of the WIFI/BT transceiver are coupled to the radio frequency front end 43. In this way, a BT signal may flow into the BT RX port of the WIFI/BT transceiver through the second antenna and the radio frequency front end 43, to implement signal receiving in BT communication. In a signal sending scenario in BT communication, a signal may be transmitted from the BT TX port of the WIFI/BT transceiver to the second antenna through the radio frequency front end 43, and sent to the outside in a form of an electromagnetic wave.

Therefore, in the solution for implementing WIFI communication and BT communication based on the shared second antenna and radio frequency front end 43 shown in FIG. 4, WIFI communication and BT communication may be supported in a time division manner by disposing one antenna and one radio frequency front end. However, in the foregoing solution in which the second antenna and the radio frequency front end 43 are shared, simultaneous operation of WIFI communication and BT communication cannot be implemented. For example, FIG. 5 is a diagram of distribution of WIFI communication and BT communication in FIG. 4 over time. In a time period T0-T1 and a time period T2-T3 shown in FIG. 5, the electronic device cannot provide a BT communication function. In a time period T1-T2 shown in FIG. 5, the electronic device cannot provide a WIFI communication function.

To provide the WIFI communication function and the BT communication function at the same time, corresponding radio frequency front ends and antennas need to be separately disposed for WIFI communication and BT communication. However, with reference to the example in FIG. 2, with a trend of miniaturization of the electronic device, space in which an antenna can be disposed in the electronic device is increasingly limited. Even if two antennas that operate at 2.4 GHz can be disposed at the same time in the electronic device, because the two antennas may be close to each other, isolation between the antennas is poor, thereby causing mutual impact between WIFI communication and BT communication.

The technical solutions provided in embodiments of this application can be applied to an electronic device. Another antenna whose operating band includes 2.4 GHz (such as a cellular antenna) and a corresponding radio frequency front end are properly multiplexed, so that when a radio frequency front end and an antenna for only WIFI communication or BT communication are separately disposed, the electronic device can provide the WIFI communication function and the BT communication function at the same time.

It should be noted that, in embodiments of this application, the electronic device may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device is not specially limited in embodiments of this application.

In an example, from a perspective of hardware composition, the electronic device to which the technical solutions provided in embodiments of this application are applied may include a processor, an external memory interface, an internal memory, a universal serial bus (universal serial bus, USB) interface, a charging management module, a power management module, a battery, an antenna 1, an antenna 2, a mobile communication module, a wireless communication module, an audio module, a speaker, a receiver, a microphone, a headset jack, a sensor module, a button, a motor, an indicator, a camera, a display, a subscriber identification module (subscriber identification module, SIM) card interface, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in embodiments of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

All the technical solutions provided in embodiments of this application can be applied to the foregoing electronic device. In some other embodiments, the electronic device in embodiments of this application may alternatively have other logical composition.

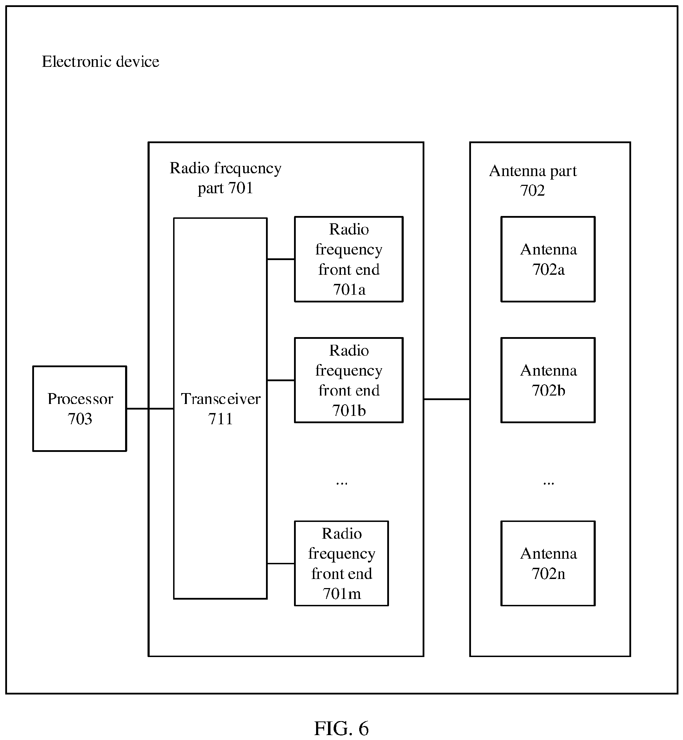

For example, FIG. 6 is a diagram of composition of an electronic device according to an embodiment of this application.

As shown in FIG. 6, a processor 703 may be disposed in the electronic device. The processor 703 may provide a digital signal processing capability in a wireless communication process.

In the electronic device shown in FIG. 6, a radio frequency part 701 and an antenna part 702 may be further disposed. The radio frequency part 701 may be coupled to the processor, to implement a radio frequency domain processing mechanism in each communication band. The antenna part 702 may be coupled to the radio frequency part 701, to implement mutual conversion between an analog signal and an electromagnetic wave.

In this example, the radio frequency part 701 may include a plurality of radio frequency front ends, such as a radio frequency front end 701 a~a radio frequency front end 701m. Each radio frequency front end is corresponding to one operating frequency, and is configured to perform radio frequency domain (for example, for an analog signal) processing on a signal at the operating frequency. In some embodiments, in an operating scenario in which sending and receiving have a same frequency, at an operating frequency corresponding to the same frequency of sending and receiving, a same radio frequency front end may be multiplexed in receiving and transmission processes. In some other embodiments, for a same frequency, different radio frequency front ends may be used in signal sending and receiving processes. The radio frequency part 701 may further include a transceiver 711. The transceiver may be disposed between the radio frequency front end and the processor, and is configured to support some processing functions in radio frequency domain. The transceiver 711 may include one or more components. When the transceiver 711 includes a plurality of components, different components may be configured to support functions corresponding to different bands.

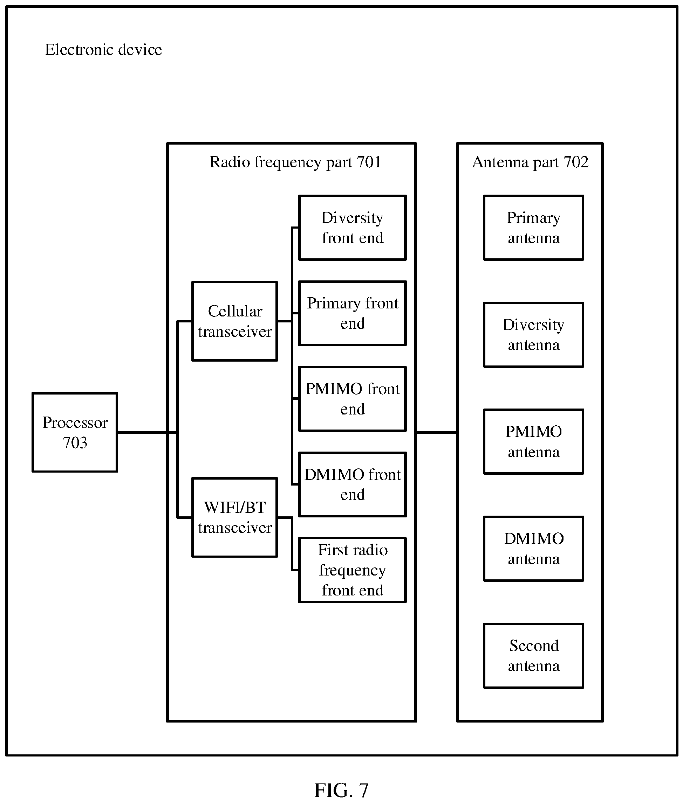

For example, as shown in FIG. 7, the radio frequency part 701 may include a diversity front end configured to support operation of a diversity antenna, a primary front end configured to support operation of a primary antenna, and a PMIMO front end and a DMIMO front end that are configured to implement multiple-input multiple-output (multiple-input multiple-output, MIMO). PMIMO may cover a transmit MIMO scenario and/or a receive MIMO scenario, and DMIMO may cover at least a receive MIMO scenario. In addition, the radio frequency part 701 may further include a radio frequency front end configured to support WIFI communication and BT communication. In some embodiments, a radio frequency front end may be shared for WIFI communication and BT communication, for example, the radio frequency front end 43 shown in FIG. 4. In some other embodiments, radio frequency front ends for WIFI communication and BT communication may be separately disposed. For example, a radio frequency front end for WIFI communication may include a 2.4G WIFI front end, and a radio frequency front end for BT communication may include a BT front end.

In the following description, an example in which WIFI communication and BT communication share one radio frequency front end is used. The radio frequency front end shared by WIFI communication and BT communication may be referred to as a first radio frequency front end, and corresponding to the radio frequency front end 43 shown in FIG. 4.

In this example, the transceiver 711 may include a cellular transceiver and a WIFI/BT transceiver. The cellular transceiver may be disposed between a radio frequency front end for cellular communication and the processor 703. For example, the cellular transceiver may be disposed between the processor 703 and the diversity front end, the primary front end, the PMIMO front end, and the DMIMO front end. The WIFI/BT transceiver may be disposed between the first radio frequency front end configured to support WIFI and/or BT communication and the processor 703.

In this example, the antenna part 702 may include at least one antenna. In some embodiments, the antenna part 702 may include a plurality of antennas, so that different antennas are used to specifically cover different operating bands to provide better radiation performance. For example, as shown in FIG. 6, the antenna part 702 may include an antenna 702a-an antenna 702n.

In a specific implementation, referring to FIG. 7, the antenna part 702 may include a diversity antenna that covers a diversity band, a primary antenna that covers a primary band, and a PMIMO antenna and a DMIMO antenna that cover a MIMO band. The PMIMO antenna may also be referred to as a PRX MIMO antenna, and the DMIMO antenna may also be referred to as a DRX MIMO antenna. In addition, the antenna part 702 may further include at least one second antenna whose operating band covers 2.4 GHz. In different implementations, the second antenna may be a WIFI antenna or a BT antenna.

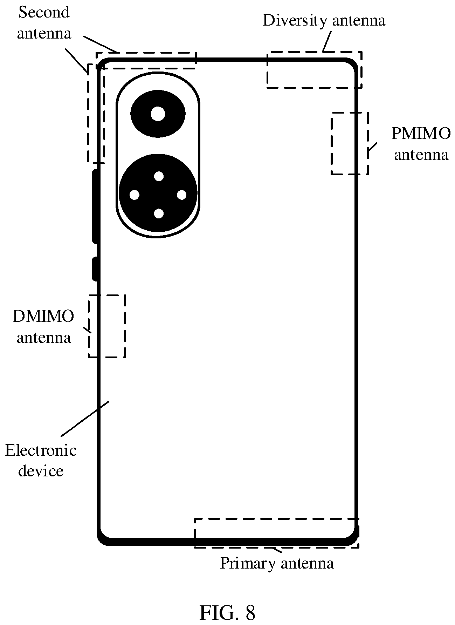

In an example, FIG. 8 is a diagram in which a primary antenna, a diversity antenna, a PMIMO antenna, a DMIMO antenna, and a second antenna are disposed in an electronic device.

As shown in FIG. 8, the plurality of antennas may be disposed around the electronic device. The second antenna and the diversity antenna may be disposed at the top of the electronic device. The primary antenna may be disposed at the bottom of the electronic device, and the PMIMO antenna and the DMIMO antenna may be disposed on a side of the electronic device. It should be noted that in some designs, as shown in FIG. 8, the second antenna may include two antennas disposed adjacently. Because the two antennas are very close to each other, 2.4G communication for different protocols cannot be supported. In this example, the two adjacently designed second antennas may be configured to provide 2.4G WIFI communication at a same frequency at the same time, thereby implementing dual-channel 2.4G WIFI communication.

It should be understood that if a BT antenna needs to be disposed separately, the BT antenna needs to be away from the second antenna disposed at the top, to ensure that isolation between the antennas meets a requirement, so that BT communication and WIFI communication do not affect each other. However, due to a space limitation of the electronic device, the primary antenna is disposed in a lower right corner that has good isolation from the second antenna, and the BT antenna cannot be separately added. In this application, BT communication is performed by multiplexing the primary antenna that covers the 2.4G band, so that BT communication and WIFI communication can be simultaneously implemented while isolation from the second antenna is met.

It may be understood that bands covered by the primary antenna, the diversity antenna, the PMIMO antenna, and the DMIMO antenna may at least partially overlap. The bands covered by the primary antenna, the diversity antenna, the PMIMO antenna, and/or the DMIMO antenna may also include the 2.4G band. For example, the band covered by the primary antenna may include the 2.4G band.

Generally, a radio frequency front end may remain connected to a corresponding antenna, so that a radio frequency signal in a corresponding band is coupled to an antenna in a corresponding operating band. For example, the primary front end may be coupled to the primary antenna to implement radiation in the primary band. The diversity front end may be coupled to the diversity antenna to implement radiation in the diversity band. The PMIMO front end may be coupled to the PMIMO antenna to implement radiation in a PMIMO band. The DMIMO front end may be coupled to the DMIMO antenna to implement radiation in a DMIMO band. The second antenna may be coupled to the first radio frequency front end to implement radiation in the corresponding 2.4G band.

However, in different scenarios, radiation performance of different antennas changes. Then, the electronic device may adjust a coupling relationship between a radio frequency front end and an antenna based on a current actual situation or a preset configuration. In this way, an optimal configuration in a corresponding band is implemented. For example, when the primary antenna is held, operating performance of the primary antenna is greatly reduced. Correspondingly, the electronic device may switch the primary front end to connect to another antenna (for example, the diversity antenna), to achieve relatively good radiation performance.

In embodiments of this application, a BT signal is connected to a switching link of the primary/diversity antenna and the P/DMIMO antenna by disposing a switching switch, to multiplex an existing antenna (for example, the primary/diversity antenna and the P/DMIMO antenna) to perform BT communication. In specific implementation, a position of the switching switch for connecting the BT signal may be flexibly adjusted based on a current actual switching setting, to achieve a minimum link loss for another switching scenario. In this application, the primary/diversity antenna and the P/DMIMO antenna may be cellular antennas.

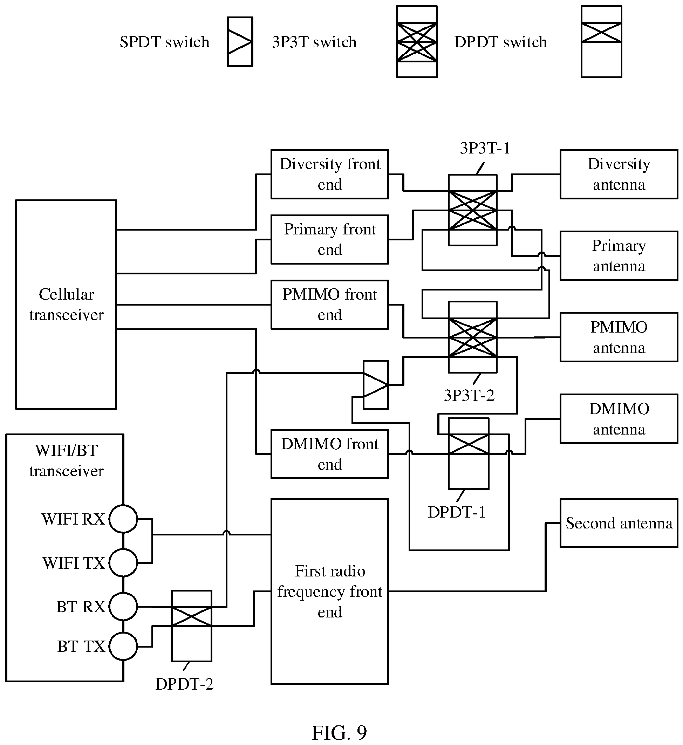

In an example, FIG. 9 is a logical diagram of coupling switching between a radio frequency part and an antenna according to an embodiment of this application. In this example, an example in which the radio frequency part and the antenna include the component shown in FIG. 7 is used. A WIFI/BT transceiver may have the composition shown in FIG. 4. For example, the WIFI/BT transceiver may be provided with four ports that are separately corresponding to WIFI communication and BT communication.

As shown in FIG. 9, a cellular transceiver may be coupled to a diversity front end, a primary front end, a PMIMO front end, and a DMIMO front end. Four switching switches may be disposed between cellular radio frequency front ends and antennas. For example, the four switching switches may include two 3P3Ts (such as a 3P3T-1 and a 3P3T-2), one DPDT (such as a DPDT-1), and one SPDT. The SPDT may be configured to connect a BT T/RX port of the WIFI/BT transceiver to the primary antenna. For example, a signal sent by the BT TX port of the WIFI/BT transceiver is sent through the primary antenna, or a signal is received through the primary antenna and transmitted to the BT RX port. The 3P3T may include three input ends and three output ends. In different states, the three input ends may be separately connected to any one of the three output ends to obtain different connection states. The DPDT-1 may include two input ends and two output ends. In different states, the two input ends may be separately connected to either of the two output ends to obtain different connection states. The SPDT may include two input ends and one output end. In different states, the two input ends are separately connected to the output end to obtain different connection states.

For example, three input ends of the 3P3T-1 may be respectively coupled to the diversity front end, the primary front end, and one output end of the 3P3T-2. Three output ends of the 3P3T-1 may be respectively coupled to the diversity antenna, the primary antenna, and one input end of the 3P3T-2. Three input ends of the 3P3T-2 may be respectively coupled to one output end of the 3P3T-1, the PMIMO front end, and the output end of the SPDT. Three output ends of the 3P3T-2 may be respectively coupled to one input end of the 3P3T-1, the PMIMO antenna, and one input end of the DPDT-1. The two input ends of the DPDT-1 may be respectively coupled to one output end of the 3P3T-2 and the DMIMO front end. The two output ends of the DPDT-1 may be respectively coupled to one input end of the SPDT and the DMIMO antenna.

For example, a first output end of the cellular transceiver is connected to the diversity front end, an output end of the diversity front end is connected to a first input end of the 3P3T-1, a second output end of the cellular transceiver is connected to the primary front end, an output end of the primary front end is connected to a second input end of the 3P3T-1, a third output end of the cellular transceiver is connected to the PMIMO front end, an output end of the PMIMO front end is connected to a second input end of the 3P3T-2, a fourth output end of the cellular transceiver is connected to the DMIMO front end, an output end of the DMIMO front end is connected to a second input end of the DPDT-1, a first output end of the 3P3T-1 is connected to the diversity antenna, a second output end of the 3P3T-1 is connected to the primary antenna, a third output end of the 3P3T-1 is connected to a first input end of the 3P3T-2, a first output end of the 3P3T-2 is connected to a third input end of the 3P3T-1, a second output end of the 3P3T-2 is connected to the PMIMO antenna, a third output end of the 3P3T-2 is connected to a first input end of the DPDT-1, a first output end of the DPDT-1 is connected to a second input end of the SPDT, a second output end of the DPDT-1 is connected to the DMIMO antenna, a first input end of the SPDT is connected to the WIFI/BT transceiver through the DPDT-2, and an output end of the SPDT is connected to a third input end of the 3P3T-2.

Both the WIFI transmit TX port and the WIFI receive RX port of the WIFI/BT transceiver are connected to a first input end of the first radio frequency front end, the BT transmit TX port of the WIFI/BT transceiver is connected to a second input end of the DPDT-2, the BT receive RX port of the WIFI/BT transceiver is connected to a first input end of the DPDT-2, a first output end of the DPDT-2 is connected to the first input end of the SPDT, a second output end of the DPDT-2 is connected to a second input end of the first radio frequency front end, and an output end of the first radio frequency front end is connected to a second antenna.

One of the two input ends of the SPDT may be coupled to a BT communication port (such as the BT TX port and the BT RX port) of the WIFI/BT transceiver, and the other of the two input ends of the SPDT may be coupled to one output end of the DPDT-1 switch. The output end of the SPDT may be coupled to one input end of the 3P3T-2.

It should be noted that, in some embodiments, as shown in FIG. 9, a DPDT switch (for example, a DPDT-2) may be further disposed at the BT T/RX port of the WIFI/BT transceiver. Two input ends of the DPDT-2 may be respectively coupled to the BT TX port and the BT RX port of the WIFI/BT receiver. Two output ends of the DPDT-2 may be respectively coupled to the first radio frequency front end and one input end of the SPDT. The DPDT-2 may be configured to switch a connection relationship between the BT T/RX port of the WIFI/BT transceiver and the first radio frequency front end and/or the SPDT.

For example, in some implementations, the DPDT-2 may be set to connect two ports at the input ends and a port that is at an output end and that is coupled to the SPDT. In this way, through the DPDT-2, the SDPT, the 3P3T-2, and the 3P3T-1, a BT signal can be conducted between the WIFI/BT transceiver and the primary antenna.

In some other implementations, the DPDT-2 may be set to connect two ports at the input ends and a port that is at an output end and that is coupled to the first radio frequency front end. In this way, through the DPDT-2, operating effect that WIFI communication and BT communication multiplex a same second antenna in FIG. 4 can be achieved.

In addition, the WIFI TX port and the WIFI RX port of the WIFI/BT transceiver may be further coupled to the second antenna through the first radio frequency front end, to implement 2.4G WIFI communication.

Therefore, in the circuit design shown in FIG. 9, when a primary communication requirement is relatively low, a BT signal may be connected to a switching link of cellular communication, to multiplex a cellular antenna (for example, the primary antenna) to perform BT communication.

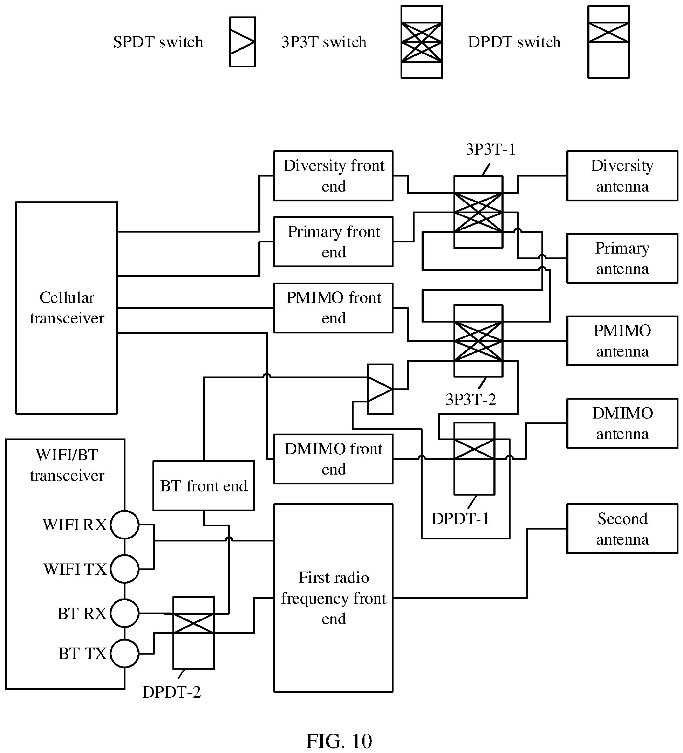

It should be noted that, in the design implementation shown in FIG. 9, one output end of the DPDT-2 may be directly coupled to the input end of the SPDT. In some other embodiments, as shown in FIG. 10, a radio frequency front end (such as a BT front end shown in FIG. 10) corresponding to BT communication may be further disposed between one output end of the DPDT-2 and the input end of the SPDT. In this way, when BT communication is performed by using the cellular antenna, radio frequency domain modulation on the BT signal may be improved by using the separately disposed BT front end, to achieve better BT communication quality. The following example continues to be described by using the design implementation shown in FIG. 9 as an example.

It may be understood that, in different scenarios, a processor of an electronic device can perform switch configuration in a corresponding scenario based on a current switching parameter such as transmit power, reference signal received power (Reference Signal Receiving Power, RSRP), or a signal to noise ratio (Signal to Noise Ratio, SNR) of each antenna. Switch configurations in different scenarios may be preconfigured in the electronic device. The switch configuration may include a specific instruction of the processor to control each switch to operate on a corresponding path in the corresponding scenario. Therefore, after determining a current scenario, the electronic device may send a corresponding control instruction to each switching switch based on the switch configuration, so that the switching switch operates in a corresponding turn-on state.

In an example, the following Table 1 shows a switch configuration for antenna switching.

**Table 1**

| Antenna | Configuration 1 | Configuration 2 | Configuration 3 | Configuration 4 |
|---|---|---|---|---|
| Primary antenna | Tx/PRX | DRX | PMIMO | DMIMO |
| Diversity antenna | DRX | Tx/PRX | DRX | DRX |
| PMIMO antenna | PMIMO | PMIMO | Tx/PRX | PMIMO |
| DMIMO antenna | DMIMO | DMIMO | DMIMO | Tx/PRX |

Tx/PRX corresponds to connection of the primary front end, DRX corresponds to connection of the diversity front end, PMIMO corresponds to connection of the PMIMO front end, and DMIMO corresponds to connection of the DMIMO front end.

Then, based on the example shown in Table 1, in a scenario corresponding to the configuration 1, the electronic device may control the two 3P3Ts and the DPDT-1 shown in FIG. 9, so that the primary antenna is coupled to the primary front end, the diversity antenna is coupled to the diversity front end, the PMIMO antenna is coupled to the PMIMO front end, and the DMIMO antenna is coupled to the DMIMO front end.

In a scenario corresponding to the configuration 2, the electronic device may control the two 3P3Ts and the DPDT-1 shown in FIG. 9, so that the primary antenna is coupled to the diversity front end, the diversity antenna is coupled to the primary front end, the PMIMO antenna is coupled to the PMIMO front end, and the DMIMO antenna is coupled to the DMIMO front end.

In a scenario corresponding to the configuration 3, the electronic device may control the two 3P3Ts and the DPDT-1 shown in FIG. 9, so that the primary antenna is coupled to the PMIMO front end, the diversity antenna is coupled to the diversity front end, the PMIMO antenna is coupled to the primary front end, and the DMIMO antenna is coupled to the DMIMO front end.

In a scenario corresponding to the configuration 4, the electronic device may control the two 3P3Ts and the DPDT-1 shown in FIG. 9, so that the primary antenna is coupled to the DMIMO front end, the diversity antenna is coupled to the diversity front end, the PMIMO antenna is coupled to the PMIMO front end, and the DMIMO antenna is coupled to the primary front end.

In this way, flexible adjustment between each antenna and a corresponding radio frequency front end is implemented.

Based on this, as shown in FIG. 9, in the solution provided in this application, the BT TX port and RX port of the WIFI/BT receiver are connected to a circuit of the foregoing antenna switching switch through the SPDT. When the electronic device performs BT communication, through the SPDT, any antenna that can cover the 2.4G band in the cellular antenna may be connected to a Bluetooth front end, to implement BT communication. Because the cellular antenna is multiplexed in the solution, WIFI communication is not affected.

In an implementation, when BT communication operates, the primary antenna in the cellular antenna may be occupied, to achieve good radiation performance. It may be understood that, as shown in FIG. 8, in a general design, a distance between the primary antenna and the second antenna is relatively long, and isolation between the primary antenna and the second antenna at 2.4 GHz usually can be higher than 30 dB. Therefore, multiplexing the primary antenna to perform BT communication can ensure that BT communication and WIFI communication are simultaneously performed, and ensure that mutual impact between BT communication and WIFI communication is small.

Certainly, in some other implementations, the BT TX port and RX port of the WIFI/BT receiver may alternatively be connected to another antenna whose isolation from the second antenna is higher than preset isolation (for example, 30 dB), to achieve the foregoing objective. In the following example, the primary antenna is multiplexed for BT communication.

It may be understood that, in different implementations, the BT TX port and RX port of the WIFI/BT receiver may be connected to a switching link at different positions through the SPDT. For example, the BT TX port and RX port of the WIFI/BT receiver may be connected, through the SPDT, to any switching link connected to the primary antenna.

In a possible implementation, in embodiments of this application, as shown in FIG. 9, the SPDT may be disposed on a DMIMO link with a lowest performance requirement in four cellular antennas. In this way, a switch insertion loss caused by the SPDT affects a communication scenario of only the DMIMO link, and does not affect another circuit.

For example, the SPDT may be connected to a link corresponding to an output end of the DPDT-1 and an input end of the 3P3T-2 shown in FIG. 9. In this way, in a common case (such as the configuration 1 shown in Table 1) in which the DMIMO front end is coupled to the DMIMO antenna, a radio frequency signal still does not pass through the newly added SPDT. Therefore, no additional insertion loss in this communication scenario is caused.

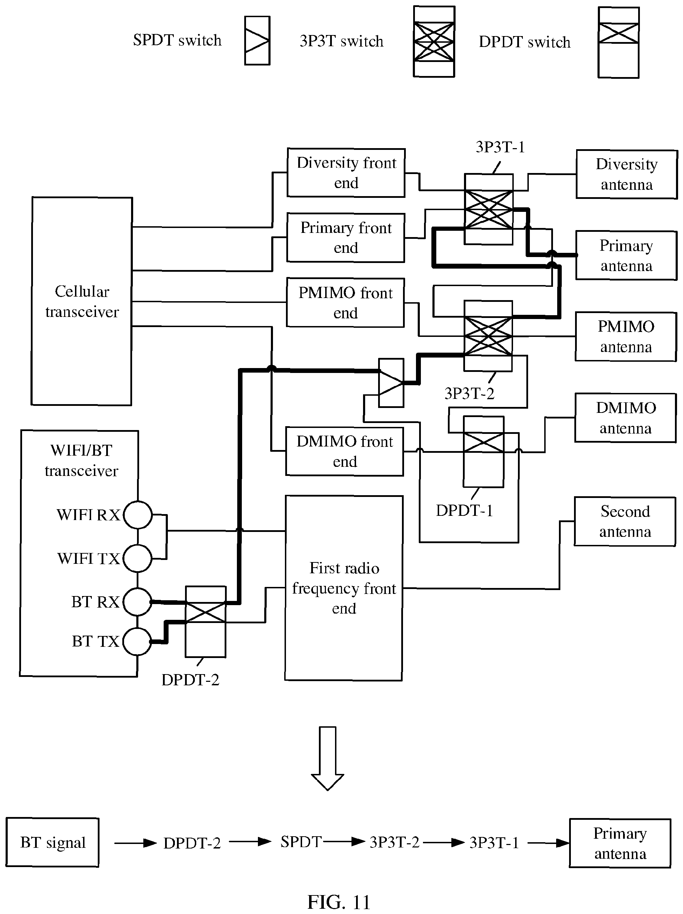

In this way, based on the circuit connection shown in FIG. 9, FIG. 11 shows a transmission condition of a BT signal during BT communication. It can be learned that in a transmission scenario, the BT TX port of the WIFI/BT receiver may transmit a BT signal to the primary antenna through the DPDT-2, the SPDT, the 3P2T-2, and the 3P3T-1 for radiation. Correspondingly, in a receiving scenario, a BT signal received by the primary antenna may be transmitted to the BT RX port of the WIFI/BT receiver through the 3P3T-1, the 3P2T-2, the SPDT, and the DPDT-2.

In this BT signal connection form, that is, a form in which the output end of the SPDT is connected between the 3P2T-2 and the DPDT-1, an additional insertion loss caused by disposing the SPDT is generated only when the DMIMO uses the link.

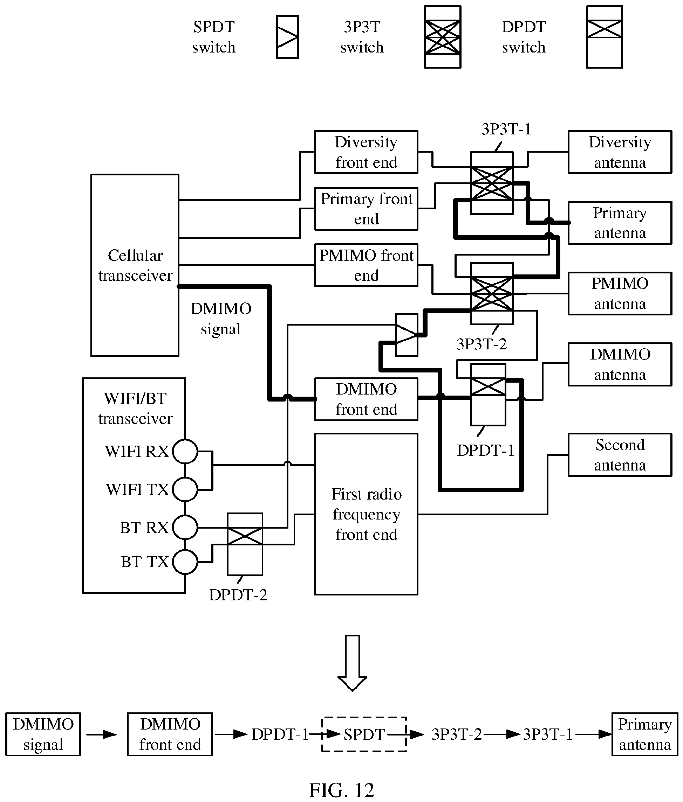

For example, with reference to the configuration shown in Table 1, an insertion loss of the SPDT is generated in only a case in which the DMIMO front end is coupled to the primary antenna in the configuration 4. For example, with reference to FIG. 12, a transmission scenario is used as an example. The DMIMO front end may transmit a to-be-transmitted signal to the primary antenna through the DPDT-1, the SPDT, the 3P3T-2, and the 3P3T-1 for transmission. For another link in the current configuration or for another configuration, no impact is generated due to SPDT disposing. To compare insertion losses of configured links more clearly, the following Table 2 shows an insertion loss generated on each link after the SPDT for connecting a BT signal is disposed.

**Table 2**

| Antenna | Configuration 1 | Configuration 2 | Configuration 3 | Configuration 4 |
|---|---|---|---|---|
| Primary antenna | No impact | No impact | No impact | +0.5 dB |
| Diversity antenna | No impact | No impact | No impact | No impact |
| PMIMO antenna | No impact | No impact | No impact | No impact |
| DMIMO antenna | No impact | No impact | No impact | No impact |

As shown in Table 2, in only a scenario corresponding to the configuration 4, the newly added SPDT in this application generates an insertion loss of 0.5 dB on only a DMIMO path. Therefore, during actual operation, the solution shown in FIG. 9 implements BT communication, and basically does not affect normal cellular communication.

Therefore, based on the foregoing descriptions in FIG. 9-FIG. 12, in embodiments of this application, a BT signal is connected between a radio frequency front end of a cellular antenna and an antenna by using an SPDT, so that multiplexing of the cellular antenna in BT communication can be implemented. In addition, in some implementations, connecting the BT signal to a link with a low DMIMO use frequency minimizes impact, on operation of the cellular antenna, of an insertion loss caused by connecting the BT signal.

In the foregoing example, allocation of primary, diversity, PMIMO, and DMIMO links after the BT signal is connected is illustrated. The primary, diversity, PMIMO, and DMIMO links may all belong to a primary card or a secondary card. In some other embodiments, the primary, diversity, PMIMO, and DMIMO links may be separately allocated to a primary card or a secondary card.

With reference to a specific example, the following describes allocation for a primary card and a secondary card on another antenna by using an example in which BT communication occupies a primary antenna according to a mechanism shown in FIG. 11.

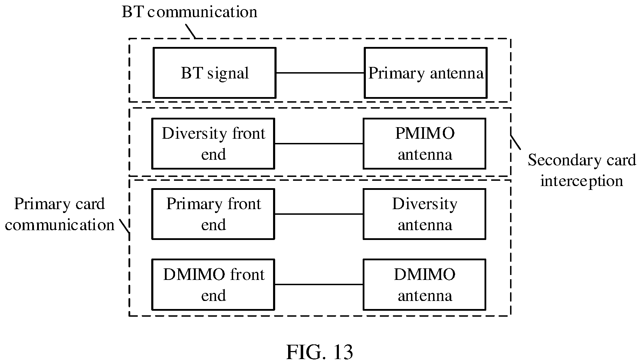

For example, FIG. 13 is a diagram of access logic of a radio frequency front end and an antenna according to an embodiment of this application. As shown in FIG. 13, a BT signal may be coupled to a primary antenna, and data is transmitted by occupying the primary antenna by BT communication shown in FIG. 11. A diversity front end may be coupled to a PMIMO antenna. In this example, the diversity correspondence may be switched to a secondary card network, to implement interception on a secondary card by using the PMIMO antenna. A primary front end may be coupled to a diversity antenna, and a DMIMO front end may be coupled to a DMIMO front end, to implement a communication function of a primary card.

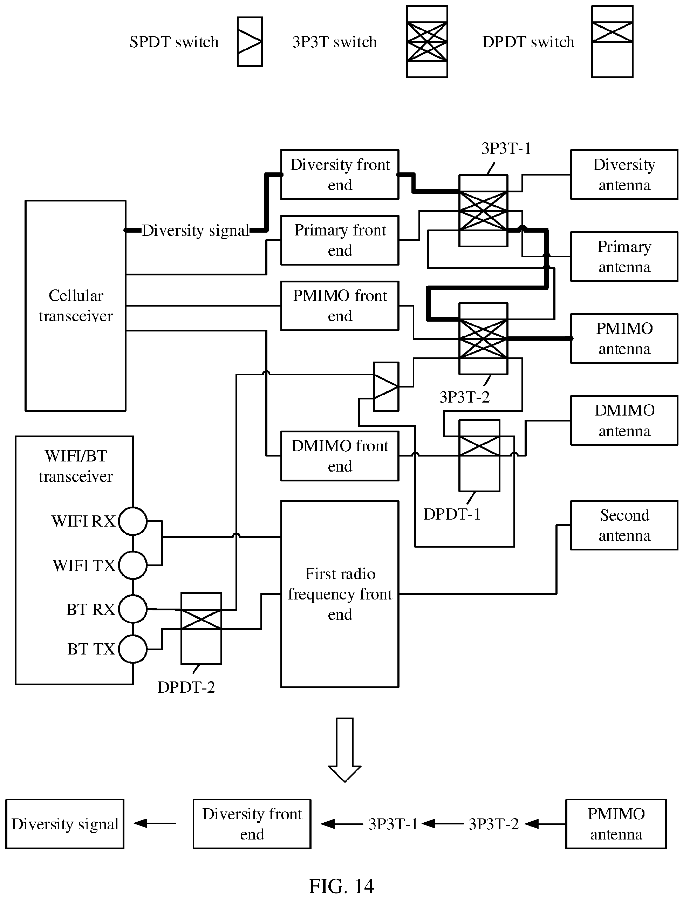

In a possible implementation, with reference to the circuit connection logic shown in FIG. 9, FIG. 14 shows signal transmission in a diversity link interception process in a secondary card network. As shown in FIG. 14, the PMIMO antenna may transmit an intercepted signal to the diversity front end and a cellular transceiver through a 3P3T-2 and a 3P3T-1 for radio frequency domain processing, and then a processed signal is transmitted to a processor. In this way, interception for the secondary card network is implemented. It can be learned that the secondary card interception link does not pass through a newly added SPDT. Therefore, no additional loss is caused due to cellular antenna multiplexing of BT.

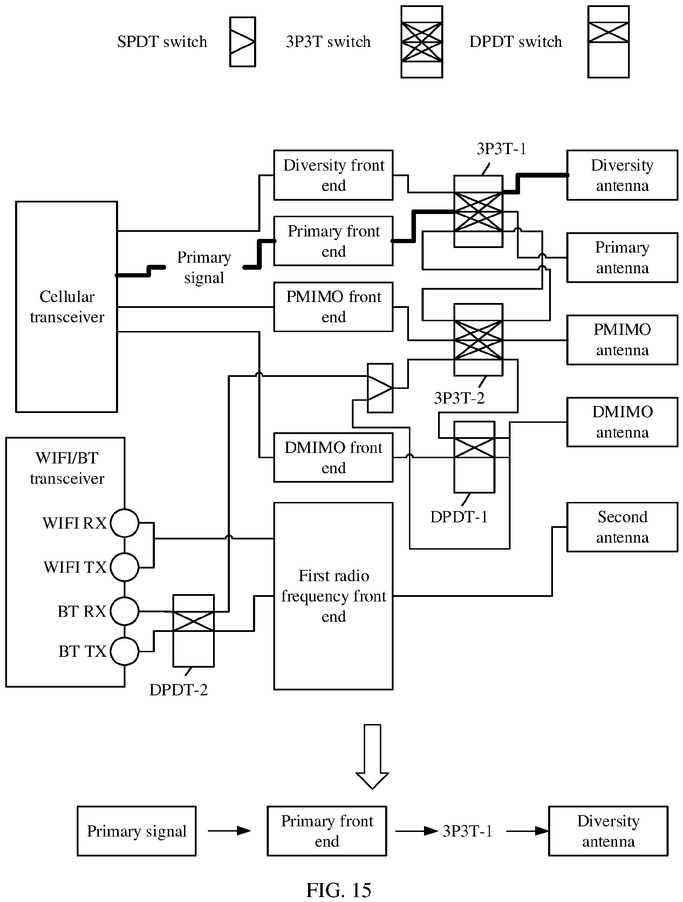

FIG. 15 shows signal transmission in a primary link communication process in a primary card network. As shown in FIG. 15, a signal sending scenario is used as an example. A cellular transceiver may transmit, by using a primary front end, a to-be-sent signal to a diversity antenna through a 3P3T-1, so that the diversity antenna converts the to-be-sent signal into an electromagnetic wave for radiation. It can be learned that data transmission on the primary link does not pass through a newly added SPDT. Therefore, no additional loss is caused due to cellular antenna multiplexing of BT.

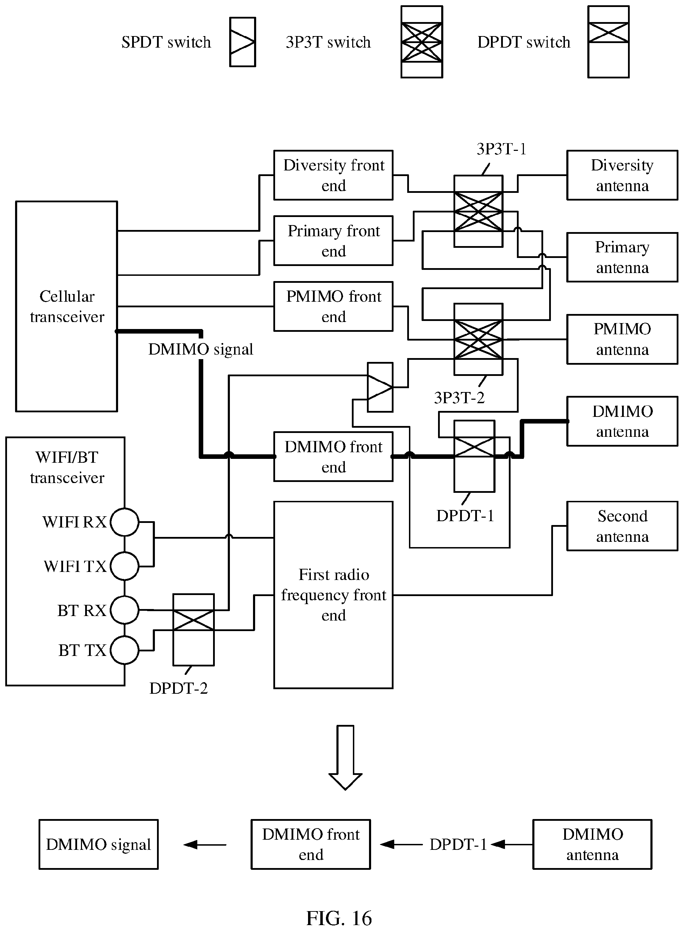

FIG. 16 shows signal transmission in a DMIMO link communication process in a primary card network. As shown in FIG. 16, a signal receiving scenario is used as an example. A DMIMO antenna may transmit a received signal to a DMIMO front end through a DPDT-1 for processing. In this way, DMIMO communication of a primary card is implemented. It can be learned that data transmission on the DMIMO link does not pass through a newly added SPDT. Therefore, no additional loss is caused due to cellular antenna multiplexing of BT.

In this way, with reference to the descriptions in FIG. 13-FIG. 15, based on the circuit connection shown in FIG. 9, the electronic device can multiplex the cellular antenna to perform BT communication and perform communication including a primary/secondary card. In addition, implementation of the BT communication may not significantly affect communication of the cellular primary/secondary card.

It should be noted that in the foregoing embodiment, an example in which a BT signal is connected to a cellular link through an SPDT to multiplex a cellular antenna to perform BT communication is used for description. In some other embodiments of this application, a WIFI front end may be connected to a cellular link or another antenna link in a similar form, to implement antenna multiplexing.

In the foregoing example, an example in which two paths of MIMO (PMIMO and DMIMO) are disposed on an electronic device is used for description. Correspondingly, two 3P3Ts need to be disposed between a radio frequency front end and an antenna to implement multipath switching. The solution in which a primary antenna is multiplexed for BT communication provided in embodiments of this application is not limited to the foregoing disposing manner.

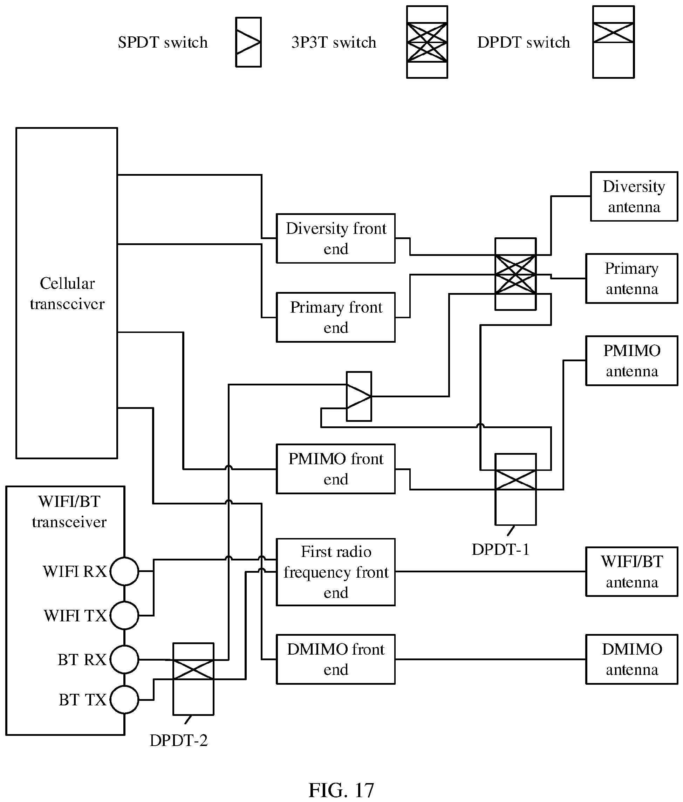

For example, FIG. 17 is a diagram of another logical circuit between a radio frequency front end and an antenna according to an embodiment of this application. In this example, a PMIMO link and a DMIMO link may still be disposed in an electronic device. Different from the foregoing example, in this example, the DMIMO link may not access the foregoing switching logic through a switch.

In a specific implementation, one 3P3T and one DPDT (such as a DPDT-1) may be disposed between cellular radio frequency front ends and antennas. In addition, to implement multiplexing between BT communication and a primary antenna, as described in the foregoing example, a BT signal may be connected to a link of a PMIMO front end through an SPDT. For example, a BT TX port and a BT RX port of a WIFI/BT transceiver may be connected to a cellular communication link through a DPDT-2.

The cellular radio frequency front ends are separately coupled to the cellular transceiver.

Three ports on a side that is of the 3P3T and that is close to the radio frequency front end (for example, an input end of the 3P3T) may be respectively coupled to a diversity front end, a primary front end, and a single-port side of the SPDT (for example, an output end of the SPDT). Correspondingly, three ports on a side that is of the 3P3T and that is close to the antenna (for example, an output end of the 3P3T) may be respectively coupled to a diversity antenna, a primary antenna, and one port on a side that is of the DPDT and that is close to a radio frequency front end (for example, an input end of the 3P3T).

Two ports on a side that is of the DPDT-1 and that is close to the radio frequency front end may be respectively coupled to one port on the side that is of the 3P3T and that is close to the antenna, and a PMIMO front end. Two ports on a side that is of the DPDT-1 and that is close to the antenna may be respectively coupled to one port in two ports of the SPDT and a PMIMO antenna.

One of two ports on a dual-port side of the SPDT may be coupled to the BT TX port and the BT RX port of the WIFI/BT transceiver through the DPDT-2. The other of the two ports on the dual-port side of the SPDT may be coupled to one port that is of the DPDT-1 and that is close to the antenna. One port on the single-port side of the SPDT may be coupled to one port that is of the 3P3T and that is close to the radio frequency front end.

In this example, a DMIMO antenna coupled to a DMIMO front end may be further disposed in the electronic device, to support communication related to the DMIMO link of the electronic device.

From another perspective, the circuit connection shown in FIG. 17 may alternatively be described as follows: A first output end of the cellular transceiver is connected to the diversity front end, and an output end of the diversity front end is connected to a first input end of the 3P3T. A second output end of the cellular transceiver is connected to the primary front end, and an output end of the primary front end is connected to a second input end of the 3P3T. A third output end of the cellular transceiver is connected to the PMIMO front end, an output end of the PMIMO front end is connected to a second input end of the DPDT-1, a fourth output end of the cellular transceiver is connected to the DMIMO front end, and an output end of the DMIMO front end is connected to the DMIMO antenna. A WIFI RX port and a WIFI TX port of the WIFI/BT transceiver are connected to a first input end of a first radio frequency front end. The BT RX port and the BT TX port of the WIFI/BT transceiver are connected to a first input end and a second input end of the DPDT-2. A first output end of the DPDT-2 is connected to a second input end of the first radio frequency front end. A second output end of the DPDT-2 is connected to a first input end of the SPDT. A second input end of the SPDT is connected to a first output end of the DPDT-1. A first input end of the DPDT-1 is connected to a third output end of the 3P3T.

A first output end of the 3P3T is connected to the diversity antenna, and a second output end of the 3P3T is connected to the primary antenna. A second output end of the DPDT-1 is connected to the PMIMO antenna. An output end of the first radio frequency front end is connected to a second antenna. The output end of the DMIMO front end is connected to the DMIMO antenna.

Therefore, when BT communication needs to be performed, a BT signal may be coupled to the primary antenna through the DPDT-2, the SPDT, and the 3P3T, to implement multiplexing of the primary antenna. Correspondingly, another radio frequency front end may flexibly switch to the diversity antenna or the PMIMO antenna according to an actual scenario. For example, the primary front end may be coupled to the diversity antenna through the 3P3T, and the diversity front end may be coupled to the PMIMO antenna through the 3P3T and the DPDT-1. For another example, the primary front end may be coupled to the diversity antenna through the 3P3T, and the PMIMO front end may be coupled to the PMIMO antenna through the DPDT-1. For another example, the primary front end may be coupled to the PMIMO antenna through the 3P3T and the DPDT-1, and the PMIMO front end may be coupled to the diversity antenna through the DPDT-1, the SPDT, and the 3P3T.

It can be learned that in the foregoing antenna switching logic, only when the PMIMO front end uses the diversity antenna for radiation, a specific insertion loss is caused due to disposing of the SPDT, and no insertion loss is caused for an operating link of another radio frequency front end due to the SPDT. When the PMIMO operates, a performance requirement is low. Therefore, causing a loss due to the SPDT does not significantly affect operation of the PMIMO. Therefore, BT communication is implemented without affecting operation of the primary, diversity, and PMIMO.

In some other implementations, the logic shown in FIG. 17 may be further applied to a case in which multipath MIMO is set in the electronic device. For example, if PMIMO and DMIMO are set in the electronic device, when there is a BT communication requirement, the electronic device may further use the solution in the foregoing example to connect a BT signal to the primary antenna through the SPDT. Another antenna (for example, the diversity antenna and the MIMO antenna) may be selectively connected to any two of the PMIMO front end, the DMIMO front end, the primary front end, and the diversity front end based on the logical switching shown in FIG. 17. In this way, cellular communication is implemented.

It should be noted that in the foregoing example, primary antenna multiplexing for BT communication and switching logic of another corresponding antenna are described in detail by using an example in which BT communication is performed by multiplexing the primary antenna (as shown in FIG. 11). In some other embodiments, BT communication may alternatively be implemented by multiplexing another cellular antenna.

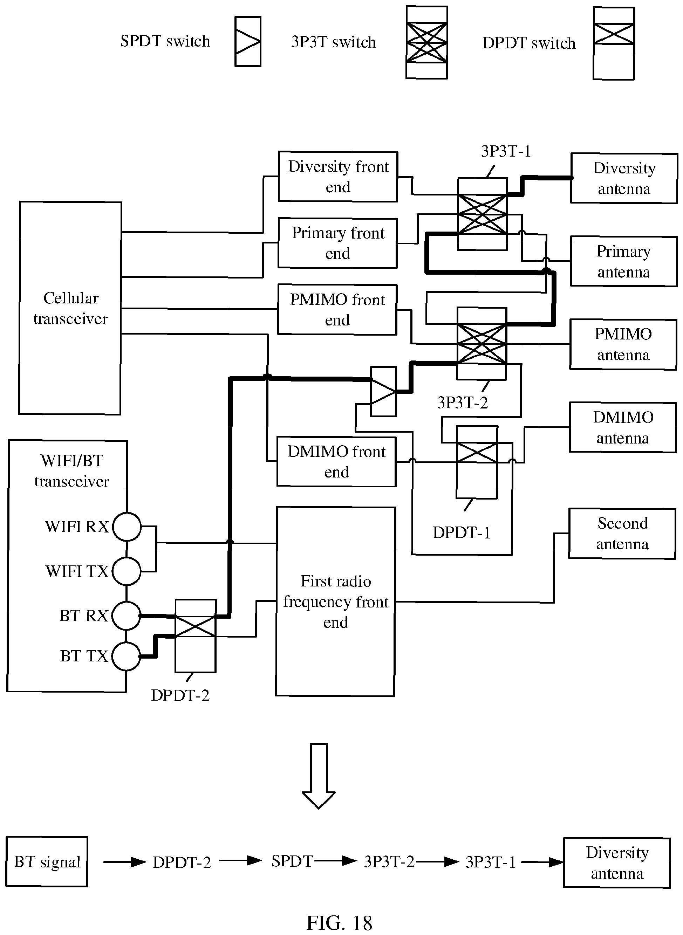

For example, FIG. 18 is a diagram of signal flowing during BT communication performed by multiplexing a diversity antenna. It can be learned that in this example, a BT signal may be transmitted by the WIFI/BT transceiver to the diversity antenna through the DPDT-2, the SPDT, the 3P3T-2, and the 3P3T-1. This implements BT communication by using the diversity antenna.

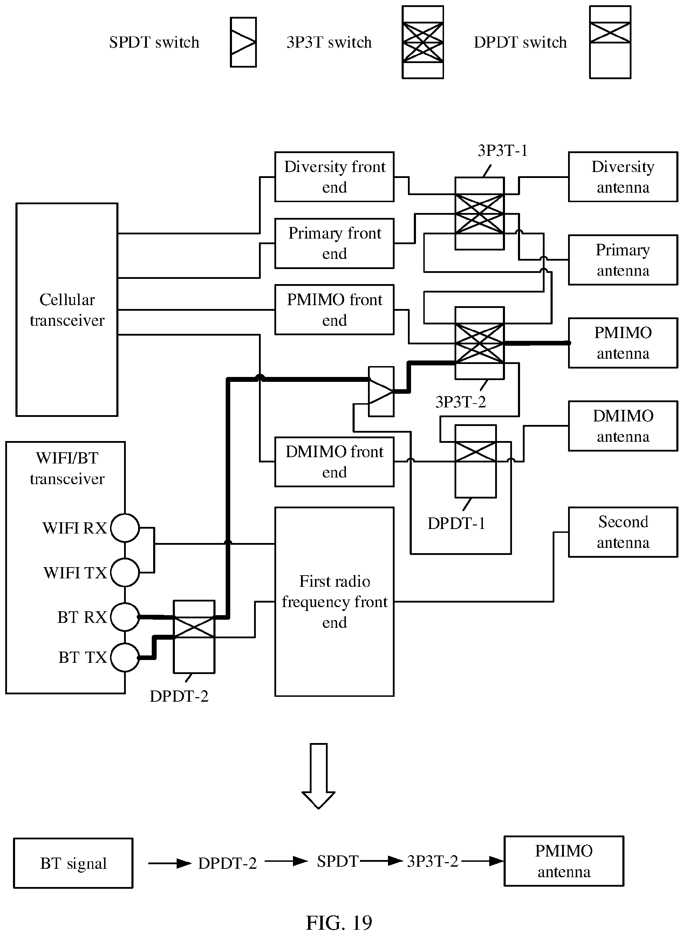

FIG. 19 is a diagram of signal flowing during BT communication performed by multiplexing a PMIMO antenna. It can be learned that in this example, a BT signal may be transmitted by the WIFI/BT transceiver to the PMIMO antenna through the DPDT-2, the SPDT, and the 3P3T-2. This implements BT communication by using the PMIMO antenna.

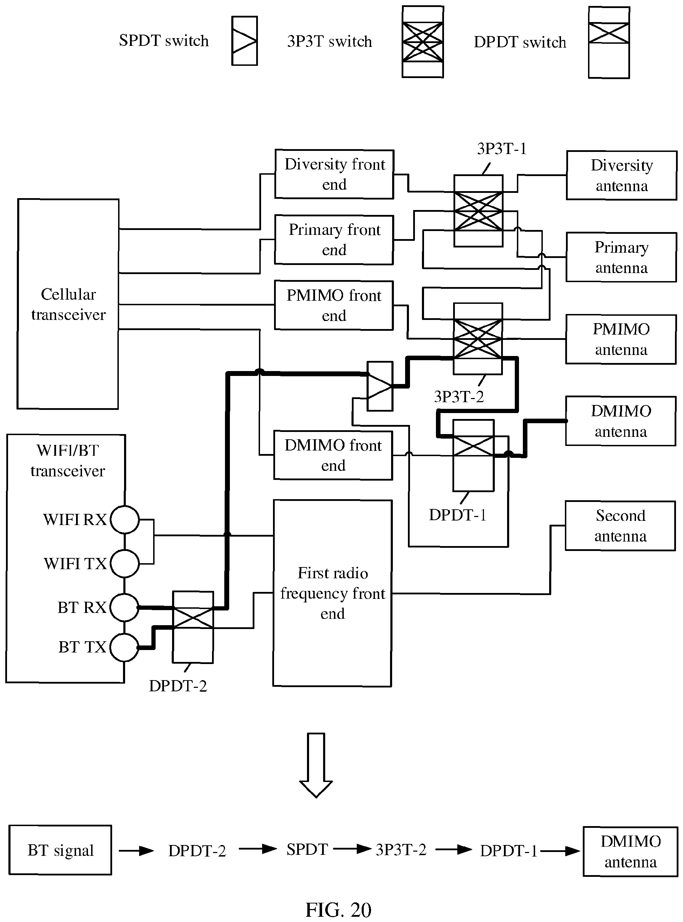

FIG. 20 is a diagram of signal flowing during BT communication performed by multiplexing a DMIMO antenna. It can be learned that in this example, a BT signal may be transmitted by the WIFI/BT transceiver to the DMIMO antenna through the DPDT-2, the SPDT, the 3P3T-2, and the DPDT-1. This implements BT communication by using the DMIMO antenna.

In addition, FIG. 9-FIG. 20 show an example in which a BT signal is connected to cellular switching logic by using the SPDT in embodiments of this application. The SPDT may be disposed between the DPDT-2 and the 3P3T-2, as shown in FIG. 9. In some other embodiments, the SPDT may alternatively be disposed at another position to implement BT signal connection.

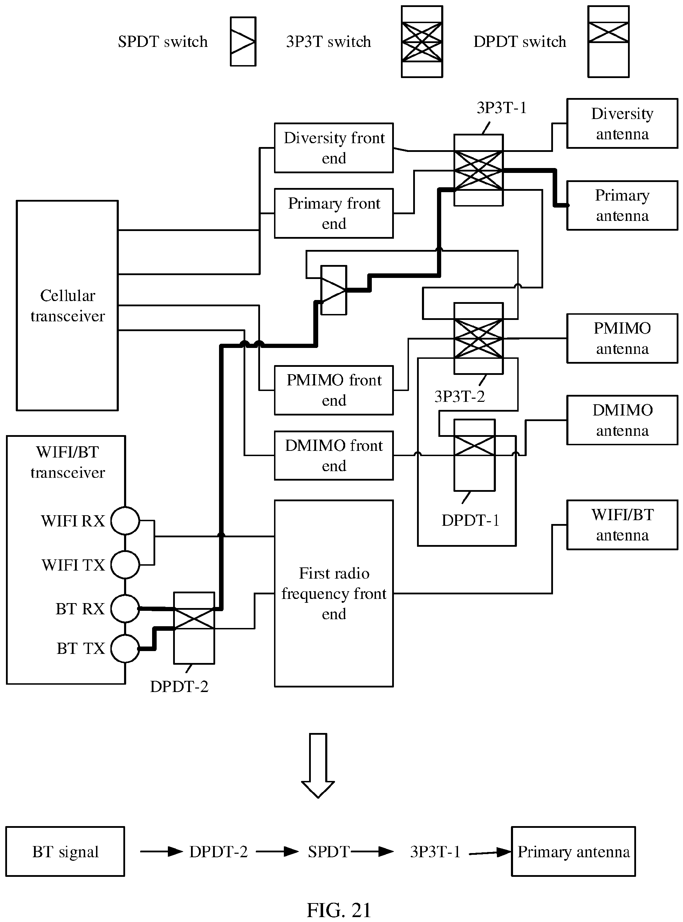

In an example, as shown in FIG. 21, the SPDT may be disposed on a path between the 3P3T-2 and the 3P3T-1 to perform BT signal connection. In the example shown in FIG. 21, two access ends of the SPDT may be respectively coupled to the BT communication port of the WIFI/BT transceiver and one output end of the 3P3T-2. The output end of the SPDT may be coupled to one input end of the 3P3T-2. Therefore, when the primary antenna needs to be multiplexed to perform BT communication, according to the circuit logic shown in FIG. 21, a BT signal may be coupled to the primary antenna through the DPDT-2, the SPDT, and the 3P3T-1. In this way, the BT signal is sent and received by multiplexing the primary antenna.

It may be understood that, with reference to the circuit structure shown in FIG. 21, another cellular antenna may alternatively be multiplexed for BT communication. For a specific implementation, refer to the foregoing implementation. Details are not described herein again.

Although this application is described with reference to specific features and embodiments, it is clear that various modifications and combinations may be made to this application without departing from the spirit and scope of this application. Correspondingly, this specification and the accompanying drawings are merely example description of this application defined by the appended claims and are considered to cover any and all modifications, variations, combinations, or equivalents in the scope of this application. It is clear that a person skilled in the art may make various modifications and variations to this application without departing from the spirit and the scope of this application. Thus, this application is intended to cover these modifications and variations, provided that they fall within the scope of the claims of this application and their equivalent technologies.

## Claims

1. A circuit for implementing antenna multiplexing, wherein
the circuit is used in an electronic device, at least one cellular antenna is further disposed in the electronic device, and the at least one cellular antenna is configured to support cellular communication of the electronic device;
the circuit comprises: a first transceiver, wherein the first transceiver comprises a Bluetooth BT communication port; and a first switching module, wherein the first switching module comprises a first switching module first end and a first switching module second end that are used for input and a first switching module third end that is used for output;
the BT communication port of the first transceiver is coupled to the first end of the first switching module, the first switching module third end of the first switching module is coupled to a first antenna, and the first antenna is one of the at least one cellular antenna; and
the first switching module comprises a first working state, and in the first working state, the first switching module first end is connected to the first switching module third end, so that the first antenna is configured to perform BT communication.

2. The circuit according to claim 1, wherein
the electronic device further comprises a second transceiver and at least one cellular radio frequency front end;
the second transceiver is connected to the at least one cellular radio frequency front end, the at least one cellular radio frequency front end is coupled to the at least one cellular antenna, and frequencies of signals that can be processed by different cellular radio frequency front ends are not identical; and
the second transceiver and the at least one cellular radio frequency front end are configured to perform radio frequency domain processing on a cellular communication signal when the electronic device performs cellular communication.

3. The circuit according to claim 2, wherein
a second switching module is disposed between the at least one cellular radio frequency front end and the at least one cellular antenna, and the second switching module comprises one or more switching switches; and
the second switching module has at least two different working states, and in different working states of the second switching module, connection relationships between the at least one cellular radio frequency front end and the at least one cellular antenna are not identical.

4. The circuit according to claim 3, wherein that the first switching module third end is coupled to the first antenna comprises:
the first switching module third end is coupled to at least one end of the second switching module, so that the electronic device controls the second switching module, to couple the BT communication port of the first transceiver to the first antenna through the first switching module and the second switching module.

5. The circuit according to claim 3 or 4, wherein
the second switching module comprises at least one of the following: a 3P3T switch and a DPDT switch.

6. The circuit according to claim 5, wherein a BT front end is further disposed in the electronic device, and a BT front end first end and a BT front end second end are disposed on the BT front end;
the BT front end first end is coupled to the first switching module first end, and the BT front end second end is coupled to the BT communication port of the first transceiver; and
the BT front end is configured to perform, in cooperation with the first transceiver, radio frequency domain processing on a signal in BT communication.

7. The circuit according to any one of claims 1-4, wherein the electronic device further comprises a second antenna and a first radio frequency front end;
an operating band of the second antenna comprises a 2.4G band, and the first radio frequency front end is disposed between a local area network WIFI communication port of the first transceiver and the second antenna; and
the first radio frequency front end and the first transceiver are configured to perform radio frequency domain processing on a signal in WIFI communication and/or a signal in BT communication.

8. The circuit according to claim 3, wherein the second transceiver is a cellular transceiver, and the at least one cellular radio frequency front end comprises a diversity front end, a primary front end, a PMIMO front end, and a DMIMO front end; the first transceiver is a WIFI/BT transceiver, and the Bluetooth BT communication port comprises a WIFI transmit TX port, a WIFI receive RX port, a BT transmit TX port, and a BT receive RX port; and the first switching module is an SPDT switch, and the second switching module comprises a first 3P3T switch, a second 3P3T switch, and a first DPDT switch; and
a first output end of the cellular transceiver is connected to the diversity front end, an output end of the diversity front end is connected to a first input end of the first 3P3T switch, a second output end of the cellular transceiver is connected to the primary front end, an output end of the primary front end is connected to a second input end of the first 3P3T switch, a third output end of the cellular transceiver is connected to the PMIMO front end, an output end of the PMIMO front end is connected to a second input end of the second 3P3T switch, a fourth output end of the cellular transceiver is connected to the DMIMO front end, an output end of the DMIMO front end is connected to a second input end of the first DPDT switch, a first output end of the first 3P3T switch is connected to the diversity antenna, a second output end of the first 3P3T switch is connected to the primary antenna, a third output end of the first 3P3T switch is connected to a first input end of the second 3P3T switch, a first output end of the second 3P3T switch is connected to a third input end of the first 3P3T switch, a second output end of the second 3P3T switch is connected to the PMIMO antenna, a third output end of the second 3P3T switch is connected to a first input end of the first DPDT switch, a first output end of the first DPDT switch is connected to a second input end of the SPDT, a second output end of the first DPDT switch is connected to the DMIMO antenna, a first input end of the SPDT is directly or indirectly connected to the WIFI/BT transceiver, and an output end of the SPDT is connected to a third input end of the second 3P3T switch.

9. The circuit according to claim 8, wherein a third switching module is further disposed between the BT communication port of the first transceiver and the first switching module, the third switching module comprises a third switching module first end and a third switching module second end that are used for input and a third switching module third end and a third switching module fourth end that are used for output, the third switching module first end and the third switching module second end are connected to the BT communication port of the first transceiver, and when the third switching module works in different states, the third switching module first end and the third switching module second end are connected to the third switching module third end, or the third switching module first end and the third switching module second end are connected to the third switching module fourth end; and
that the BT communication port of the first transceiver is coupled to the first switching module first end comprises:
the BT communication port of the first transceiver is coupled to the third switching module first end, and the third switching module third end is coupled to the first switching module first end,
so that the electronic device controls the third switching module first end to be connected to the third switching module third end, to couple the BT communication port of the first transceiver to the first antenna through the third switching module and the first switching module.

10. The circuit according to claim 9, wherein the BT communication port of the first transceiver comprises the BT transmit TX port and the BT receive RX port; and
that the third switching module first end and the third switching module second end are connected to the BT communication port of the first transceiver comprises:
the BT transmit TX port is connected to the third switching module first end, and the BT receive RX port is connected to the third switching module second end; or
the BT transmit TX port is connected to the third switching module second end, and the BT receive RX port is connected to the third switching module first end.

11. The circuit according to claim 10, wherein the third switching module is a second DPDT switch;
the first input end of the SPDT is connected to the WIFI/BT transceiver through the second DPDT switch; and
both the WIFI transmit TX port and the WIFI receive RX port of the WIFI/BT transceiver are connected to a first input end of the first radio frequency front end, the BT transmit TX port of the WIFI/BT transceiver is connected to a second input end of the DPDT-2, the BT receive RX port of the WIFI/BT transceiver is connected to a first input end of the DPDT-2, a first output end of the DPDT-2 is connected to the first input end of the SPDT, a second output end of the DPDT-2 is connected to a second input end of the first radio frequency front end, and an output end of the first radio frequency front end is connected to a second antenna.

12. The circuit according to any one of claims 9-11, wherein the third switching module fourth end is coupled to the second antenna through the first radio frequency front end; and
when the third switching module first end and the third switching module second end are connected to the third switching module fourth end, the BT communication is performed by using the second antenna.

13. The circuit according to any one of claims 1-4, wherein an operating band of the first antenna covers 2.4 GHz-2.5 GHz.

14. The circuit according to any one of claims 1-4, wherein
an operating band of the first antenna comprises at least a part of a cellular communication band between 700 MHz-3 GHz.

15. The circuit according to claim 4, wherein
the at least one cellular antenna comprises a primary antenna;
the second switching module comprises a first 3P3T and a second 3P3T;
the first switching module comprises a first SPDT; and
that the BT communication port of the first transceiver is coupled to the first antenna through the first switching module comprises:
the BT communication port is coupled to the first antenna through the first SPDT, the second 3P3T, and the first 3P3T, and the first antenna is the primary antenna.

16. An electronic device, wherein the circuit according to any one of claims 1-15 is disposed in the electronic device.

17. A circuit for implementing antenna multiplexing, wherein
the circuit is used in an electronic device, at least one cellular antenna is disposed in the electronic device, and the at least one cellular antenna is configured to support cellular communication of the electronic device;
the circuit comprises: a first transceiver, wherein the first transceiver comprises a Bluetooth BT communication port; and a first switching module, wherein the first switching module comprises a first switching module first end and a first switching module second end that are used for input and a first switching module third end that is used for output;
the BT communication port of the first transceiver is coupled to the first end of the first switching module, the first switching module third end of the first switching module is coupled to a first antenna, and the first antenna is one of the at least one cellular antenna;
the first switching module comprises a first working state, and in the first working state, the first switching module first end is connected to the first switching module third end, so that the first antenna is configured to perform BT communication;
the electronic device further comprises a second transceiver and at least one cellular radio frequency front end;
the second transceiver is connected to the at least one cellular radio frequency front end, the at least one cellular radio frequency front end is coupled to the at least one cellular antenna, and frequencies of signals that can be processed by different cellular radio frequency front ends are not identical;
the second transceiver and the at least one cellular radio frequency front end are configured to perform radio frequency domain processing on a cellular communication signal when the electronic device performs cellular communication;
a second switching module is disposed between the at least one cellular radio frequency front end and the at least one cellular antenna, and the second switching module comprises one or more switching switches;
the second switching module has at least two different working states, and in different working states of the second switching module, connection relationships between the at least one cellular radio frequency front end and the at least one cellular antenna are not identical;
before the first antenna is configured to perform the BT communication, the first antenna is coupled to a first cellular radio frequency front end, so that the first cellular radio frequency front end performs cellular communication in a first band by using the first antenna; and when the first antenna is configured to perform the BT communication, the first cellular radio frequency front end is coupled to a third antenna, so that the first cellular radio frequency front end performs cellular communication in the first band by using the third antenna, wherein the third antenna is comprised in the at least one cellular antenna, the third antenna is different from the first antenna, and the first cellular radio frequency front end is comprised in the at least one cellular radio frequency front end;
the second transceiver is a cellular transceiver, and the at least one cellular radio frequency front end comprises a diversity front end, a primary front end, a PMIMO front end, and a DMIMO front end; the first transceiver is a WIFI/BT transceiver, and the Bluetooth BT communication port comprises a BT transmit TX port and a BT receive RX port; and a WIFI communication port is further disposed on the first transceiver, and the WIFI communication port comprises a WIFI transmit TX port and a WIFI receive RX port;
the first switching module is an SPDT switch, and the second switching module comprises a first 3P3T switch, a second 3P3T switch, and a first DPDT switch;
a first output end of the cellular transceiver is connected to the diversity front end, an output end of the diversity front end is connected to a first input end of the first 3P3T switch, a second output end of the cellular transceiver is connected to the primary front end, an output end of the primary front end is connected to a second input end of the first 3P3T switch, a third output end of the cellular transceiver is connected to the PMIMO front end, an output end of the PMIMO front end is connected to a second input end of the second 3P3T switch, a fourth output end of the cellular transceiver is connected to the DMIMO front end, an output end of the DMIMO front end is connected to a second input end of the first DPDT switch, a first output end of the first 3P3T switch is connected to a diversity antenna, a second output end of the first 3P3T switch is connected to a primary antenna, a third output end of the first 3P3T switch is connected to a first input end of the second 3P3T switch, a first output end of the second 3P3T switch is connected to a third input end of the first 3P3T switch, a second output end of the second 3P3T switch is connected to a PMIMO antenna, a third output end of the second 3P3T switch is connected to a first input end of the first DPDT switch, a first output end of the first DPDT switch is connected to a second input end of the SPDT, a second output end of the first DPDT switch is connected to a DMIMO antenna, a first input end of the SPDT is directly or indirectly connected to the WIFI/BT transceiver, and an output end of the SPDT is connected to a third input end of the second 3P3T switch; and
the diversity antenna, the primary antenna, the PMIMO antenna, and the DMIMO antenna are comprised in the at least one cellular antenna.

18. The circuit according to claim 17, wherein that the first switching module third end is coupled to the first antenna comprises:
the first switching module third end is coupled to at least one end of the second switching module, so that the electronic device controls the second switching module, to couple the BT communication port of the first transceiver to the first antenna through the first switching module and the second switching module.

19. The circuit according to claim 17 or 18, wherein
the second switching module comprises at least one of the following: a 3P3T switch and a DPDT switch.

20. The circuit according to claim 19, wherein a BT front end is further disposed in the electronic device, and a BT front end first end and a BT front end second end are disposed on the BT front end;
the BT front end first end is coupled to the first switching module first end, and the BT front end second end is coupled to the BT communication port of the first transceiver; and
the BT front end is configured to perform, in cooperation with the first transceiver, radio frequency domain processing on a signal in BT communication.

21. The circuit according to claim 17 or 18, wherein the electronic device further comprises a second antenna and a first radio frequency front end;
an operating band of the second antenna comprises a 2.4G band, and the first radio frequency front end is disposed between the local area network WIFI communication port of the first transceiver and the second antenna; and
the first radio frequency front end and the first transceiver are configured to perform radio frequency domain processing on a signal in WIFI communication and/or a signal in BT communication.

22. The circuit according to claim 17, wherein a third switching module is further disposed between the BT communication port of the first transceiver and the first switching module, the third switching module comprises a third switching module first end and a third switching module second end that are used for input and a third switching module third end and a third switching module fourth end that are used for output, the third switching module first end and the third switching module second end are connected to the BT communication port of the first transceiver, and when the third switching module works in different states, the third switching module first end and the third switching module second end are connected to the third switching module third end, or the third switching module first end and the third switching module second end are connected to the third switching module fourth end; and
that the BT communication port of the first transceiver is coupled to the first switching module first end comprises:
the BT communication port of the first transceiver is coupled to the third switching module first end, and the third switching module third end is coupled to the first switching module first end,
so that the electronic device controls the third switching module first end to be connected to the third switching module third end, to couple the BT communication port of the first transceiver to the first antenna through the third switching module and the first switching module.

23. The circuit according to claim 22, wherein the BT communication port of the first transceiver comprises the BT transmit TX port and the BT receive RX port; and
that the third switching module first end and the third switching module second end are connected to the BT communication port of the first transceiver comprises:
the BT transmit TX port is connected to the third switching module first end, and the BT receive RX port is connected to the third switching module second end; or
the BT transmit TX port is connected to the third switching module second end, and the BT receive RX port is connected to the third switching module first end.

24. The circuit according to claim 23, wherein the third switching module is a second DPDT switch;
the first input end of the SPDT is connected to the WIFI/BT transceiver through the second DPDT switch; and
both the WIFI transmit TX port and the WIFI receive RX port of the WIFI/BT transceiver are connected to a first input end of the first radio frequency front end, the BT transmit TX port of the WIFI/BT transceiver is connected to a second input end of the second DPDT switch, the BT receive RX port of the WIFI/BT transceiver is connected to a first input end of the second DPDT switch, a first output end of the second DPDT switch is connected to the first input end of the SPDT, a second output end of the second DPDT switch is connected to a second input end of the first radio frequency front end, and an output end of the first radio frequency front end is connected to a second antenna.

25. The circuit according to any one of claims 22-24, wherein the third switching module fourth end is coupled to the second antenna through the first radio frequency front end; and
when the third switching module first end and the third switching module second end are connected to the third switching module fourth end, the BT communication is performed by using the second antenna.

26. The circuit according to claim 17 or 18, wherein an operating band of the first antenna covers 2.4 GHz-2.5 GHz.

27. The circuit according to claim 17 or 18, wherein
an operating band of the first antenna comprises at least a part of a cellular communication band between 700 MHz-3 GHz.

28. The circuit according to claim 18, wherein
the at least one cellular antenna comprises a primary antenna;
the second switching module comprises a first 3P3T and a second 3P3T;
the first switching module comprises a first SPDT; and
that the BT communication port of the first transceiver is coupled to the first antenna through the first switching module comprises:
the BT communication port is coupled to the first antenna through the first SPDT, the second 3P3T, and the first 3P3T, and the first antenna is the primary antenna.
